# EUROPEAN PATENT SPECIFICATION

(11) **EP 2 342 121 B1**
(45) Date of publication and mention of the grant of the patent: **08.06.2016**
(21) Application number: 09823901.5
(22) Date of filing: 23.10.2009
(51) Int. Cl.: B62D 33/063, B60N 2/14, B66F 9/075, B66C 13/54, E02F 9/16

(54) **TURNABLE CABIN SECTION**
DREHBARER KABINENABSCHNITT
PARTIE DE CABINE ROTATIVE

(30) Priority: 31.10.2008 SE 0802314
(43) Date of publication of application: 13.07.2011
(73) Proprietor: Cargotec Patenter AB, 341 81 Ljungby (SE)
(72) Inventor: EKLUND, Sven-Gunnar, S-341 39 Ljungby (SE); GARTNELL, Lars, S-302 73 Halmstad (SE)
(74) Representative: Andrén, Bertil
(86) International application number: PCT/SE2009/051211
(87) International publication number: WO 2010/050881

(56) References cited:
- EP-A2- 1 953 069
- WO-A2-2006/034452
- DE-A1- 3 807 848
- GB-A- 2 289 669
- JP-A- 2007 247 337
- JP-A- 2007 247 337
- US-A- 5 346 035
- US-A- 5 346 035
- US-A1- 2003 141 736
- US-A1- 2008 179 141

## Description

The present invention relates to a rotating cab section for a vehicle, said cab section comprising a first floor part and a second floor part being rotatable relative to the first floor part, said first floor part comprising a substantially planar first floor portion, which exhibits a substantially circular opening, and said second floor part comprising a substantially planar and circular second floor portion, which is arranged in the opening of the first floor portion.

In particular, the invention relates to a rotatable driver's position in a counterbalance truck, where the cab floor and the associated driver's seat and control console can be rotated 180° in order to enable forward-facing driving of the counterbalance truck both forwards and in reverse.

SE 358 617 B discloses a revolving driver's position which is supported and driven by a hydraulic revolving motor.

US 2006/0201732 A1 discloses a tractor having a rotating cab section. The cab section is arranged on a platform or base plate, which is mounted on a vertical shaft.

WO 01/68400 A1 discloses a cab section which is tiltable as well as rotatable by means of control mechanisms. The control mechanism for rotating the cab section acts along the tiltable Z axis of the cab section.

US 6,105,699 A discloses a cab section mounted on a large ball coupling. The ball coupling carries a rotary bearing, whereby the cab section can be rotated.

DE 28 49 272 A1 discloses a cab section being mounted on a belt-driven rotary mount.

US 2008/0179141 A1 discloses the preamble claim 1.

All the above-mentioned known rotating cab sections exhibit the disadvantage that the realization of the rotary function requires a relatively large space in the height direction. This is a problem especially in counterbalance trucks, where a low point of gravity of the vehicle is the aim.

The object of the present invention is to solve this problem and to produce a cab section with a rotating floor part, where the rotary function is realized easily and reliably without occupying a large space in the height direction of the cab section.

The cab section according to the invention is defined by the features of claim 1.

In the following, the invention will be described more closely with reference to accompanying drawings.

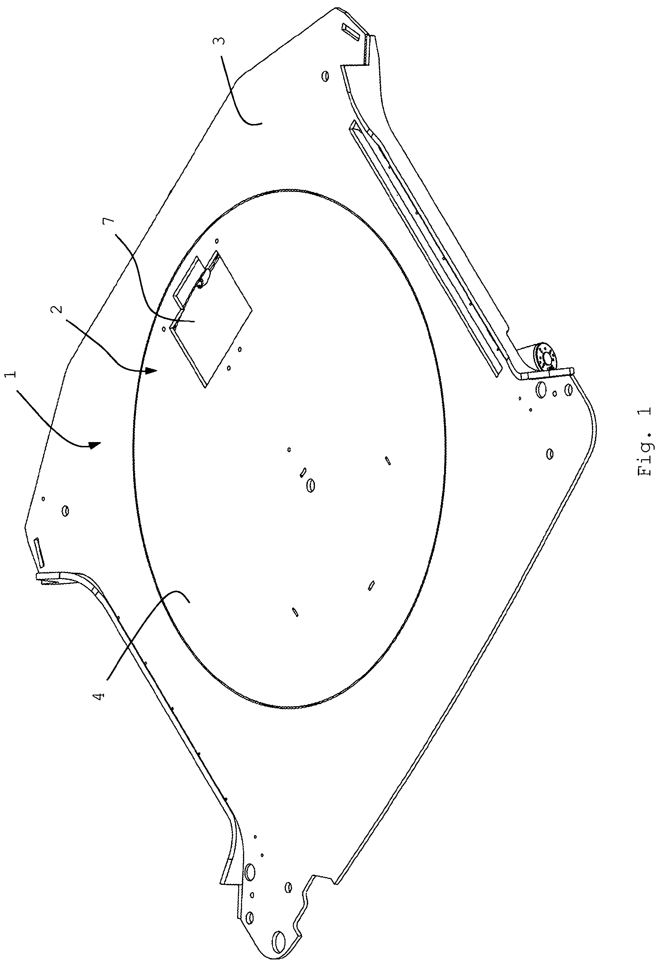

Figure 1 shows an embodiment of a cab structure according to the invention.

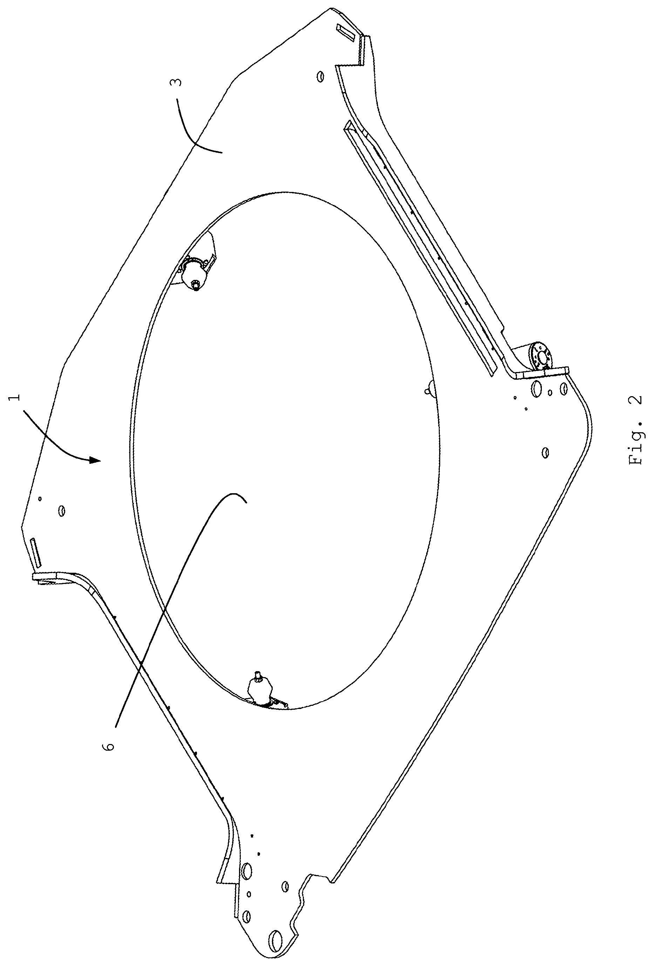

Figure 2 shows the cab structure of Figure 1, wherein the rotatable floor part has been removed.

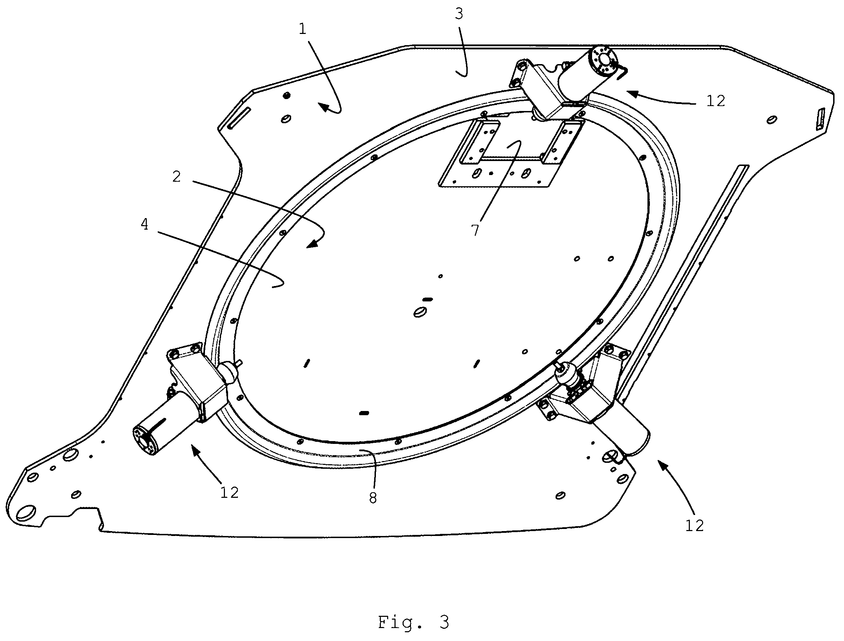

Figure 3 shows the cab structure of Figure 1 in a view obliquely from below.
Figure 4 and 5 show a supporting element in the cab structure of Figure 1.
Figure 6 shows the supporting element of Figure 5 in a cross-section along the section line indicated with VI-VI in Figure 5.

The cab structure according to the invention comprises a first floor part 1, which is fixedly mounted on the vehicle, and a second floor part 2, which is rotatably arranged in the first floor part 1.

The first floor part 1 comprises a substantially planar floor portion 3. Also the second floor part 2 comprises a substantially planar floor portion 4. The floor portions 3 and 4 extend substantially in the same plane, i.e. they are level with each other and have a common normal direction.

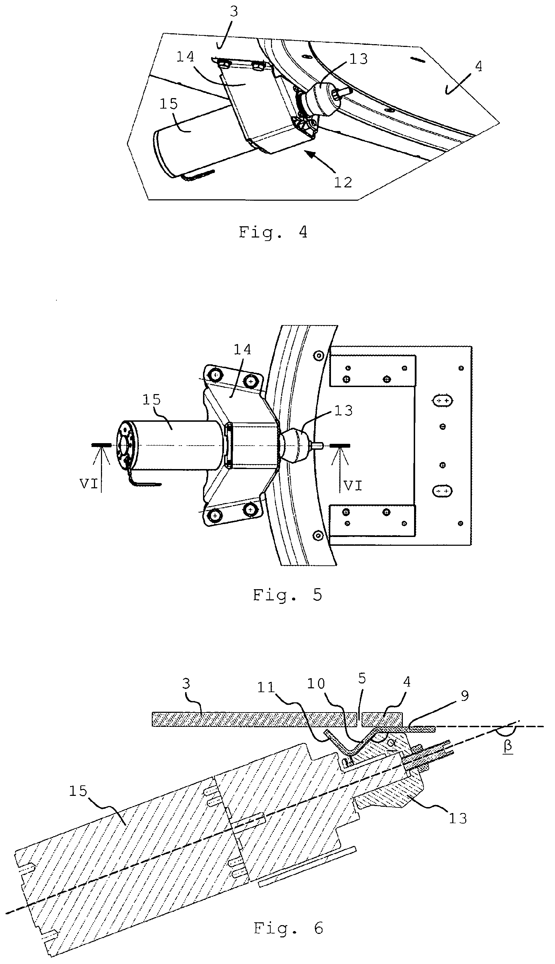

The floor portion 4 of the second floor part 2 has a substantially circular shape and is arranged in a corresponding circular opening 6 in the floor portion 3 of the first floor part 1. Only a small slot 5 (see Figure 6) separates the floor portions 3 and 4. The diameter of the floor portion 4 can, for example, be about 950 mm, and the slot can, for example, be about 5 mm.

The top side of the floor portion 4 is adapted to support a not-shown driver's seat. The floor portion 4 exhibits at least one through-opening 7, through which control lines and rods from a not-shown control console and a not-shown pedal assembly, which are mounted on top of the floor portion 4, are adapted to extend. Accordingly, the driver's seat, control console and pedal assembly of the vehicle are adapted to follow the second floor part 2 in its rotational movement.

The floor part 2 comprises a support rim 8 which, in the circumferential direction, extends along the periphery of the floor portion 4 and is attached to the bottom side of the floor portion 4. In the radial direction, the support rim 8 exhibits a first, planar, inner portion 9 (see Figure 6) which forms an abutment surface against the floor portion 4, a second, intermediate portion 10 which connects to the inner portion 9 and angles downward approximately 45° relative to the inner portion 9, and a third, outer portion 11 which is connected to the intermediate portion 10 and angles upward about 90° relative to the intermediate portion 10. Accordingly, the intermediate portion 10 forms an angle α to the plane of the floor portion 4 which is preferably about 135°.

The outer portion 11 and the outer part of the intermediate portion 10 are projecting outside the floor portion 4 and in under the floor portion 3. Accordingly, the support rim 8 prevents an upward movement of the floor portion 4 relative to the floor portion 3.

The cab section also comprises supporting elements 12 for enabling the rotational movement of the floor part 2 relative to the floor part 1. Each of the supporting elements 12 comprise a rotary element in the form a of roller 13, which is rotatably mounted in a bearing housing 14, said bearing housing 14 in its turn being mounted on the bottom side of the floor portion 3. Instead of a roller, a wheel or another type of rotary element can be used. The cab section comprises at least three such supporting elements 12, which are arranged around the opening in the floor portion 3 in which the floor portion 4 is arranged. The supporting elements 12 are so mounted that the rollers 13 extend in under the opening of the floor portion 3 and, thus, also in under the floor portion 4. The rotation axes of the rollers 13 are perpendicular to the tangential direction of the circular floor portion 4 and form an angle β to the plane of the floor portion 4 which is preferably about 160°. Each roller 13, which can be made of metal or a polymer material, for example rubber, is bevelled, so that its shape corresponds to the bottom surfaces of the portions 9 and 10 of the support rim 8 with a good fit. Accordingly, the roller 13 has the shape of two straight truncated cones, the base surfaces of which abut against each other, wherein the cone angles depend on the angle between the rotation axis of the roller 13 and the floor part 2.

The portions 9 and 10 of the support rim 8 are adapted to rest on the rollers 13, and the second, intermediate portion 10 thus forms an angled abutment edge for the rollers 13. In an alternative embodiment (not shown), the floor portion 3 rests directly on the rollers 13, in which case the periphery of the floor portion 3 constitutes an abutment edge for the rollers 13. According to the invention, the supporting elements 12 are thus arranged in the circumferential direction around the opening of the first floor portion 3, for supporting the second floor part 2, wherein the periphery of the floor portion 4 is adapted to rest rotatably, directly or indirectly, on the rollers.

Preferably, the supporting elements 12 are arranged at even intervals in the circumferential direction around the floor portion 4. Accordingly, in case the cab structure comprises three supporting elements, the preferred angular distance between the supporting elements 12 is about 120°.

At least one, preferably at least two, and most preferably all of the supporting elements 12 comprise a motor 15 for driving the roller 13 of the supporting element 12. Accordingly, the motor-equipped supporting elements constitute actuators for rotating the floor part 2 relative to the floor part 1. The motor 15 is preferably an electric motor, the rotational direction and speed of which are controlled in a known way by the driver of the vehicle providing appropriate control and regulating signals to the motor 15, via a suitable control and regulating equipment, from his/her position in the driver's cab. Such control and regulating equipments are known *per se* and will not be described more closely herein.

In that or those supporting elements lacking a motor, the rollers are substantially frictionlessly mounted in their respective bearing housing. Accordingly, the rollers of these supporting elements have the task of supporting the floor part 2 without contributing to the rotational movement.

The driver brings the second floor part 2 to rotate relative to the first floor part 1 in that he/she provides appropriate control and regulating signals to the motors 15 from his/her position in the driver's cab, which control and regulating signals cause the motors 15 to perform a coordinated rotary motion, said rotary motion being converted into a rotational movement of the floor part 2 by means of frictional action between the support rim 8 and the rollers 13 or, in case the floor portion 4 rests directly on the rollers 13 (not shown), between the floor portion 4 and the rollers 13. In this way, the driver can rotate the second floor part 2 between a first end position, which enables forward-facing driving of the vehicle forwards, and a second end position, which enables forward-facing driving of the vehicle in reverse. Preferably, the floor part 2 can also be adjusted to an optional position between said end positions. Alternatively, the floor part 2 can also be set in one of a number of discrete, predetermined positions between said end positions.

When the floor part 2 has reached its desired position, the internal friction of the motors 15 serves to maintain the floor part 2 in this position. Normally, this internal friction is fully sufficient to ensure that the floor part 2 does not rotate from the desired position. However, the cab structure can comprise a locking device (not shown) being separate from the motors 15, for example in the form of locking means which mechanically lock the floor part 2 to the floor part 1.

The cab structure preferably comprises a positioning system for ensuring correct positioning of the floor part 2 relative to the floor part 1. Such a positioning system can, for example, comprise an optical sensor (not shown), which is arranged on the floor part 1 for detecting grooves or other marks along the periphery of the floor part 2. The positioning system can alternatively comprise an absolute angle sensor, in the form of potentiometer, which is attached between a non-rotatable part of the cab structure and the bottom side of the floor part 2, at the rotational centre of the floor part 2.

As has been mentioned above, the abutment edge, i.e. the portion 10, forms an angle α to the plane of the floor portion 4 which is preferably about 135°. By means of this arrangement, it is ensured that the floor part 2, during its rotational movement, is automatically centered in the opening of the floor part 1. In other words, the floor part 2 is supported by the rollers 13 in a self-centering way. It is appreciated that a sufficient self-centering is also obtained with other angular values, for example when α is within the interval 90-160°.

As has been mentioned above, the wheel axles form an angle β to the plane of the floor portion 4 which is preferably about 160°. It is appreciated that β can alternatively assume other values, for example within the interval 135-180°.

In the foregoing, the invention has been described starting from a specific embodiment. It is appreciated, however, that other embodiments can be accommodated within the scope of the invention. For instance, the rotary function of the second floor part can be realized also if only one of the supporting elements comprises a motor.

The invention can also be realized entirely without a motor for driving the second floor part 2, in which case the driver brings the second floor part 2 to rotate relative to the first floor part 1 completely manually by means of manual rotating means, for example by taking support against the cab walls. In this embodiment, however, a locking device for locking the floor parts 1 and 2 to each other, when the desired position of the floor part 2 has been reached, is required.

## Claims

1. A cab section for a vehicle, said cab section comprising a first floor part (1) and a second floor part (2) being rotatable relative to the first floor part (1), said first floor part (1) comprising a substantially planar first floor portion (3), which exhibits a substantially circular opening, and said second floor part (2) comprising a substantially planar and circular second floor portion (4), which is arranged in the opening of the first floor portion (3),
the cab section comprises at least three supporting elements (12), which are arranged in the circumferential direction around the opening of the first floor portion (3) and which each comprise a rotatable rotary element (13) for direct or indirect interaction with the periphery of the second floor portion (4), upon which rotary elements (13) the second floor portion (4) is directly, or indirectly, rotatably resting,
**characterized in that** at least one supporting element, of said at least three supporting elements (12), comprises a motor (15) for driving its rotary element (13), said motor (15) being controllable to cause the motor-connected rotary element (13) to perform a rotary motion, said rotary motion being adapted to be converted into a rotational movement of the second floor part (2) by means of direct or indirect frictional action between the motor-connected rotary element (13) and the periphery of the second floor part (2).

2. The cab section according to claim 1, **characterized in that** the second floor part (2) comprises a support rim (8) which, in the circumferential direction, extends along the periphery of the second floor portion (4) and is attached to the bottom side of the second floor portion (4), said support rim (8) exhibiting an outer portion (11) projecting outside the second floor portion (4) and in under the first floor portion (3).

3. The cab section according to claim 2, **characterized in that** the support rim (8) comprises a second portion (10) angling downward relative to the plane of the second floor portion (4), said second portion (10) constituting an angled abutment edge for the rollers (13), said abutment edge forming an angle (α) to the plane of the second floor portion (4) within the interval 90-160°, preferably, however, about 135°.

4. The cab section according to any one of the claims 1-3, **characterized in that** the rotation axes of the rollers (13) are perpendicular to the periphery of the second floor portion (4) and form an angle (β) to the plane of the second floor portion (4) within the interval 135-180°, preferably, however, about 160°.

5. The cab section according to any one of the claims 1-4, **characterized in that** said at least three supporting elements (12) are arranged with a mutual angular distance of 120°.

6. The cab section according to claim 5, **characterized in that** it comprises means for manual rotation of the second floor part (2) relative to the first floor part (1).

7. The cab section according to claim 6, **characterized in that** it comprises a locking device for locking the second floor part (2) relative to the first floor part (1) when the desired position of the second floor part (2) has been reached.

8. A vehicle, **characterized in that** it comprises a cab section according to any one of the claims 1-7.

9. The vehicle according to claim 8, **characterized in that** it is a counterbalance truck.

## Patentansprüche

1. Kabinenabschnitt für ein Fahrzeug, wobei der Kabinenabschnitt ein erstes Bodenteil (1) und ein zweites Bodenteil (2) aufweist, das relativ zu dem ersten Bodenteil (1) drehbar ist, wobei das erste Bodenteil (1) einen im Wesentlichen ebenen ersten Bodenbereich (3) aufweist, der eine im Wesentlichen kreisförmige Öffnung aufweist, und wobei das zweite Bodenteil (2) einen im Wesentlichen ebenen und kreisförmigen zweiten Bodenbereich (4) aufweist, der in der Öffnung des ersten Bodenbereichs (3) angeordnet ist, wobei der Kabinenabschnitt wenigstens drei Tragelemente (12) aufweist, die in der Umfangsrichtung um die Öffnung des ersten Bodenbereichs (3) angeordnet sind und die jeweils ein drehbares Rotationselement (13) für eine direkte oder indirekte Zusammenwirkung mit dem Umfang des zweiten Bodenbereichs (4) aufweisen, wobei der zweite Bodenbereich (4) auf den Rotationselementen (13) direkt oder indirekt drehbar gelagert ist,
**dadurch gekennzeichnet, dass**
wenigstens ein Tragelement der wenigstens drei Tragelemente (12) einen Motor (15) zum Antreiben seines Rotationselements (13) aufweist, wobei der Motor (15) derart steuerbar ist, dass er bewirkt, dass das mit dem Motor verbundene Rotationselement (13) eine Rotationsbewegung ausführt, wobei die Rotationsbewegung dafür vorgesehen ist, mittels einer direkten oder indirekten Reibwirkung zwischen dem mit dem Motor verbundenen Rotationselement (13) und dem Umfang des zweite Bodenteils (2) in eine Drehbewegung des zweiten Bodenteils (2) umgewandelt zu werden.

2. Kabinenabschnitt nach Anspruch 1,
**dadurch gekennzeichnet, dass**
das zweite Bodenteil (2) einen Tragrand (8) aufweist, der sich in der Umfangsrichtung entlang des Umfangs des zweiten Bodenbereichs (4) erstreckt und der an der unteren Seite des zweiten Bodenbereichs (4) angebracht ist, wobei der Tragrand (8) einen äußeren Bereich (11) aufweist, der sich nach außerhalb des zweiten Bodenbereichs (4) und unter den ersten Bodenbereich (3) erstreckt.

3. Kabinenabschnitt nach Anspruch 2,
**dadurch gekennzeichnet, dass**
der Tragrand (8) einen zweiten Bereich (10) aufweist, der relativ zu der Ebene des zweiten Bodenbereichs (4) nach unten abgewinkelt ist, wobei der zweite Bereich (10) eine abgewinkelte Anschlagkante für die Rollen (13) bildet, wobei die Anschlagkante einen Winkel (α) zu der Ebene des zweiten Bodenbereichs (4) innerhalb des Bereichs von 90 - 160°, bevorzugt jedoch ungefähr 135°, bildet.

4. Kabinenabschnitt nach einem der Ansprüche 1 - 3,
**dadurch gekennzeichnet, dass**
die Rotationsachsen der Rollen (13) senkrecht zu dem Umfang des zweiten Bodenbereichs (4) sind und einen Winkel (β) mit der Ebene des zweiten Bodenbereichs (4) innerhalb des Bereichs von 135 - 180°, bevorzugt jedoch ungefähr 160°, bilden.

5. Kabinenabschnitt nach einem der Ansprüche 1 - 4,
**dadurch gekennzeichnet, dass**
wenigstens drei Tragelemente (12) mit einem gegenseitigen Winkelabstand von 120° angeordnet sind.

6. Kabinenabschnitt nach Anspruch 5,
**dadurch gekennzeichnet, dass**
er eine Einrichtung zur manuellen Rotation des zweiten Bodenteils (2) relativ zu dem ersten Bodenteil (1) aufweist.

7. Kabinenabschnitt nach Anspruch 6,
**dadurch gekennzeichnet, dass**
er eine Verriegelungseinrichtung zum Verriegeln des zweiten Bodenteils (2) relativ zu dem ersten Bodenteil (1) aufweist, wenn die gewünschte Position des zweiten Bodenteils (2) erreicht worden ist.

8. Fahrzeug,
**dadurch gekennzeichnet, dass**
es einen Kabinenabschnitt nach einem der Ansprüche 1 - 7 aufweist.

9. Fahrzeug nach Anspruch 8,
**dadurch gekennzeichnet, dass**
es als Gabelstapler ausgebildet ist.

## Revendications

1. Partie de cabine pour un véhicule, ladite partie de cabine comportant une première partie de plancher (1) et une seconde partie de plancher (2) rotative par rapport à ladite première partie de plancher (1), et ladite première partie de plancher (1) comportant une première portion de plancher (3) substantiellement plane qui présente une ouverture substantiellement circulaire, et ladite seconde partie de plancher (2) comportant une seconde portion de plancher (4) substantiellement plane et circulaire, qui est disposée dans l'ouverture de la première portion de plancher (3),
ladite partie de cabine comportant au moins trois éléments de support (12) qui sont arrangés dans la direction circonférentielle autour de l'ouverture de la première portion de plancher (3) et qui comportent chacun un élément rotatif (13) pour une interaction directe ou indirecte avec la périphérie de la seconde portion de plancher (4), grâce auxquels éléments rotatifs (13) la seconde portion de plancher (4) est directement ou indirectement en appui rotatif,
**caractérisée en ce qu'**au moins un élément de support, desdits au moins trois éléments de support (12), comporte un moteur (15) pour entraîner son élément rotatif (13), ledit moteur (15) pouvant être commandé à cause de l'élément rotatif (13) raccordé au moteur pour faire effectuer un mouvement de rotation, ledit mouvement de rotation étant adapté pour être converti en un mouvement de rotation de ladite seconde partie de plancher (2) au moyen d'une action de friction directe ou indirecte entre l'élément rotatif (13) raccordé au moteur et la périphérie de la seconde partie de plancher (2).

2. Partie de cabine selon la revendication 1, **caractérisée en ce que** la seconde partie de plancher (2) comporte un rebord de support (8) qui, s'étend dans la direction circonférentielle le long de la périphérie de la seconde portion de plancher (4) et est attachée au côté inférieur de la seconde portion de plancher (4), ledit rebord de support (8) présentant une protubérance (11) externe qui se projette à l'extérieur de la seconde portion de plancher (4) sous la première portion de plancher (3).

3. Partie de cabine selon la revendication 2, **caractérisée en ce que** le rebord de support (8) comporte une seconde portion (10) inclinée vers le bas par rapport au plan de la seconde portion de plancher (4), ladite seconde portion (10) constituant un rebord d'appui angulaire pour les galets (13), ledit rebord d'appui angulaire formant un angle (α) avec le plan de la seconde portion de plancher (4) compris dans un intervalle de 90 - 160° et de préférence de l'ordre de 135°.

4. Partie de cabine selon l'une quelconque des revendications 1-3, **caractérisée en ce que** les axes de rotations des galets (13) sont perpendiculaires à la périphérie de la seconde portion de plancher (4) et forment un angle (β) par rapport au plan de la seconde portion de plancher (4) compris dans un intervalle de 135 -180° et de préférence de l'ordre de 160°.

5. Partie de cabine selon l'une quelconque des revendications 1-4, **caractérisée en ce que** lesdits au moins trois éléments de support (12) sont agencés en ayant un écartement angulaire mutuel de 120°.

6. Partie de cabine selon la revendication 5, **caractérisée en ce qu'**elle comprend des moyens pour effectuer une rotation manuelle de la seconde partie de plancher (2) relativement à la première partie de plancher (1).

7. Partie de cabine selon la revendication 6, **caractérisée en ce qu'**elle comporte un dispositif de verrouillage pour bloquer la seconde partie de plancher (2) relativement à la première partie de plancher (1), lorsque la position souhaitée de la seconde partie de plancher (2) est atteinte.

8. Véhicule, **caractérisé en ce qu'**il comporte une partie de cabine selon l'une quelconque des revendications 1-7.

9. Véhicule selon la revendication 8, **caractérisé en ce qu'**il s'agit d'un élévateur à fourches.
